**Europäisches Patentamt**

**European Patent Office**

**Office européen des brevets**

(19)

(11) Veröffentlichungsnummer: **0 088 774**
**B1**

(12) ## EUROPÄISCHE PATENTSCHRIFT

(45) Veröffentlichungstag der Patentschrift:
**04.06.86**

(21) Anmeldenummer: **82902720.0**

(22) Anmeldetag: **23.08.82**

(86) Internationale Anmeldenummer:
**PCT/EP 82/00179**

(87) Internationale Veröffentlichungsnummer:
**WO 83/01055 (31.03.83** Gazette 83/8)

(51) Int. Cl.⁴: **B 65 G 15/16,** B 65 G 47/34,
B 65 G 15/44

(54) **GURTFÖRDERER FÜR STEIL- UND SENKRECHTFÖRDERUNG.**

**Verbunden mit 82107725.2/0074522 (europäische Anmeldenummer/Veröffentlichungsnummer) durch Entscheidung vom 23.07.84.**

(30) Priorität: **14.09.81 DE 3136338**

(43) Veröffentlichungstag der Anmeldung:
**21.09.83 Patentblatt 83/38**

(45) Bekanntmachung des Hinweises auf die Patenterteilung:
**04.06.86 Patentblatt 86/23**

(84) Benannte Vertragsstaaten:
**AT BE CH DE FR GB IT LI NL SE**

(56) Entgegenhaltungen:
**DE - A - 2 519 447**
**DE - C - 1 120 978**
**DE - C - 1 134 027**
**FR - A - 575 329**
**US - A - 3 225 903**

(73) Patentinhaber: **Conrad Scholtz AG, Am Stadtrand 55/59, D-2000 Hamburg 70 (DE)**

(72) Erfinder: **PAELKE, Jürgen, An der Este 13, D-2117 Tostedt (DE)**

(74) Vertreter: **Lieck, Hans-Peter, Dipl.-Ing., Lieck & Betten Patentanwälte Maximiliansplatz 10, D-8000 München 2 (DE)**

## Beschreibung

Die Erfindung betrifft einen Gurtförderer für die Steil- und Senkrechtförderung von Schüttgut nach dem Oberbegriff des Anspruches 1.

Aus der DE-C-11 34 027 ist ein derartiger Gurtförderer als Elevator-Förderer bekannt, bei dem die Fördertaschen durch einzelne Elevator-Becher oder Stauscheiben gebildet sind. Das als Abdeckung dienende Deckband ist glatt. Seitlich wird es im Bereich der oberen Abwurftrommel durch seine Ablenk-Scheibenräder verschlossen. In Förderrichtung vor denselben ist eine besondere, stationäre Abdeckung vorgesehen. Elevator-Fördergurte können wegen der starren Elevator-Becher nur relativ langsam laufen. Ihre Förderkapazität ist sehr beschränkt. Für diesen Fall mag das glatte Deckband einen ausreichenden Ausstreu-Schutz darstellen.

Als Alternative zum Elevator-Fördergut sind in den letzten Jahren Fördergurte bekannt geworden, bei welchen auf der Tragseite eine kontinuierliche Folge von Fördertaschen durch seitliche aufgesetzte Wellenkanten und dazu quer ausgerichtete, in Fördergurtlängsrichtung in Abständen angeordnete Mitnehmerleisten aus elastomerem Werkstoff gebildet ist. Derartige sogenannte Wellenkanten-Fördergurte haben bei gleichen Abmessungen erheblich grössere Förderkapazitäten als Elevator-Fördergurte. Ausserdem können sie mit höherer Geschwindigkeit betrieben werden. Sie werden üblicherweise in einem horizontal laufenden Abschnitt beladen. Auch ein Gurtförderer mit einem derartigen Wellenkanten-Fördergurt könnte theoretisch als sogenannter L-Förderer ausgelegt sein, was bedeutet, dass das Fördertrum des Fördergurtes in einem Aufgabeabschnitt für das Schüttgut horizontal oder leicht ansteigend läuft und von einer Ablenkeinrichtung hinter der Aufgabestelle in steil ansteigender oder senkrechter Richtung der oben liegenden Abwurftrommel zuläuft, wobei das Rücktrum parallel oder wenigstens ungefähr parallel zum Fördertrum geführt wird. Für eine solche Linienführung eines Wellenkanten-Fördergurtes ist es bisher jedoch nicht überzeugend gelungen, bei hohen Fördergeschwindigkeiten – und nur diese sind bei höheren Förderleistungen wirtschaftlich sinnvoll – eine unkontrollierte Schüttgutausstreuung an der Abwurftrommel aufgrund von Fliehkräften wirksam zu verhindern. Deshalb haben sich L-Förderer mit Wellenkanten-Fördergurten in der Praxis bisher nicht durchgesetzt.

Eine gewisse Verbesserung der Schüttgut-Abgabe erreicht man mit sogenannten S-Förderern, bei welchen das Fördertrum nach abermaliger Ablenkung am oberen Ende der steilen oder senkrechten Förderstrecke der Abwurftrommel ungefähr horizontal zuläuft. Jedoch sind diese S-Förderer wegen der zweiten Ablenkung für das Fördertrum und der entsprechenden weiteren Ablenkung auch für das Rücktrum baulich wesentlich aufwendiger als die L-Förderer. Hinzu kommt noch der besondere Nachteil, dass sich die Festigkeitsberechnung für den Fördergurt grundsätzlich nur auf die Randzone des Fördergurtes beziehen darf. Dies liegt an der konkaven Ablenkung des Fördergurt-Rücktrumes hinter der Abwurftrommel von der horizontalen in die steil oder senkrecht nach unten weisende Richtung. Da die entsprechende Ablenkeinrichtung nur an schmalen Randbereichen des Fördergurtes ausserhalb seiner Wellenkanten und gegebenenfalls auf dem Kopf der Wellenkanten angreifen kann, verteilt sich die gesamte Zugbelastung des Fördergurtes an der Ablenkeinrichtung praktisch nur auf seine beiden Randbereiche, weshalb in diesen eine erheblich höhere Zugspannung auftritt, als es bei einer gleichmässigen Verteilung der Zugbelastung über die gesamte Breite des Fördergurtes der Fall wäre. Da aber der Fördergurt über seine gesamte Breite für die grösste auftretende Zugspannung zu bemessen ist, ergibt sich hieraus der Bedarf für einen Fördergurt, dessen Gesamtbelastbarkeit grösser ist, als es für die vorgegebene Förderleistung an sich notwendig wäre.

Entsprechend liegt der Erfindung die Aufgabe zugrunde, einen Gurtförderer mit einem Wellenkanten-Fördergurt für die Steil- oder Senkrechtförderung von Schüttgut zu schaffen, der bei einem im Vergleich zum S-Förderer geringen baulichen Aufwand und ohne die Notwendigkeit, einen «überdimensionierten» Fördergurt einzusetzen, trotzdem auch bei hohen Fördergeschwindigkeiten eine geordnete, praktisch ausstreuungsfreie Schüttgut-Abgabe an der Abwurftrommel gewährleistet.

Diese Aufgabe ist erfindungsgemäss mit dem in Anspruch 1 und bezüglich vorteilhafte Ausgestaltungen in den Unteransprüchen gekennzeichneten Gurtförderer gelöst.

Beim erfindungsgemässen Gurtförderer ist durch Einsatz eines Wellenkanten-Fördergurtes eine ausserordentlich hohe Förderleistung gewährleistet, die durch hohe Laufgeschwindigkeiten des Fördergurtes noch gesteigert werden kann. Trotzdem ist es aufgrund der Verwendung eines Deckbandes, das ebenfalls seitlich aufgesetzte Wellenkanten aufweist, nicht erforderlich, die komplizierte Linienführung des sogenannten S-Förderers anzuwenden. Vielmehr ist es aufgrund des Deckbandes mit Wellenkanten in der Praxis erstmalig möglich, sich für die Steil- und Senkrechtförderung von Schüttgut mit einem Wellenkanten-Fördergurt die baulichen Vorteile eines sogenannten L-Förderers zunutze zu machen einschliesslich des besonders wichtigen Vorteils, mit einem gerade nur für die benötigte Förderleistung dimensionierten Fördergurt auskommen zu können. Die seitlichen Wellenkanten des Deckbandes verhindern sicher eine vorzeitige Schüttgutausstreuung aus dem Wellenkanten-Fördergurt und bewirken trotz der Grösse des vom Fördergurt transportierten Schüttgut-Stromes eine sichere Überführung desselben, in eine geordnete Abwurfparabel. Die seitlichen Wellenkanten des Deckbandes machen zusätzliche, stationäre seitliche Abdeckungen überflüssig. Ferner ist es weder notwendig, dass das Deckband abdichtend auf den Wellenkanten des Fördergurtes aufliegt, noch dass die im Umlenkbereich der Abwurftrommel nach unten weisenden Wellenkanten des Deckbandes eine Berührung mit dem Fördergut oder dessen Wellenkanten haben, obwohl andererseits auch eine gegenseitige Berührung von Deckband und Fördergurt an ihren Wellenkanten möglich ist. Die Führung von Fördergurt und Deckband ohne gegenseitige Berührung ist im Sinne einer Verschleissminderung sehr günstig, eine gegenseitige Berührung wird sich dann empfehlen, wenn eine besonders hohe Abdichtung, zum Beispiel bei sehr feinkörnigem oder staubigem Gut erwünscht ist.

Ein besonderer Vorteil des erfindungsgemässen Gurtförderers besteht weiterhin dahin, dass sich die Abwurfparabel des Schüttgutes in ihrem Verlauf leicht steuern lässt, und zwar durch entsprechende Wahl des Winkels zwischen dem Rücktrum des Fördergurtes und dem aus dem Umlenkbereich weglaufenden Trum des Deckbandes. So kann man leicht unterschiedliche Förder-Geschwindigkeiten zum Beispiel in Abhängigkeit von der Korngrösse des jeweils geförderten Schüttgutes berücksichtigen. Eine zweckmässige bauliche Ausgestaltung des Gurtförderers zur Steuerung der Abwurfparabel geht aus den Ansprüchen 9 und 10 hervor.

Die Führung des Deckbandes im Umlenkbereich der Abwurftrommel geschieht am besten mit den Mitteln des Anspruches 6. Alternativ können statt der zwei Scheibenräder zwei Reihen Stummelrollen vorgesehen sein, was insbesondere für leichter oder kleinere Gurtförderer nach der Erfindung infrage kommt.

Im folgenden ist die Erfindung anhand eines schematisch dargestellten Ausführungsbeispiels näher erläutert. In der Zeichnung zeigen:

Figur 1 einen Ausschnitt aus einem L-Gurtförderer für Senkrechtförderung mit dem oberen Ende der senkrechten Förderstrecke und dem mitlaufenden Deckband in Seitenansicht;

Figur 2 einen Querschnitt längs der Linie II–II in Figur 1.

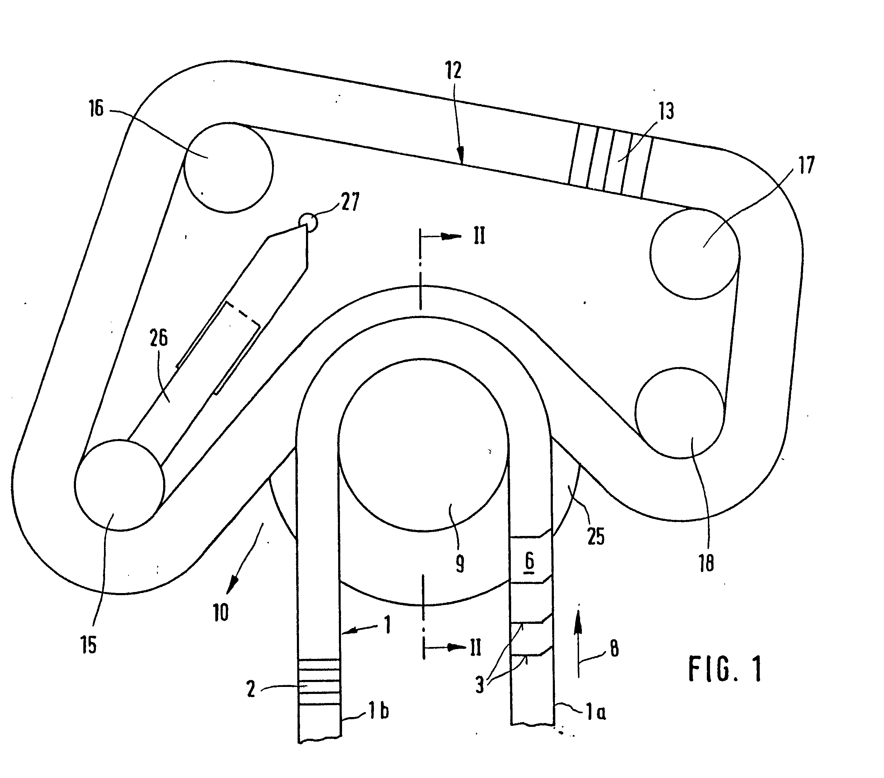

Der in Figur 1 gezeigte Gurtförderer für die Senkrechtförderung von Schüttgut arbeitet mit einem Fördergurt 1 aus Gummi oder dergleichen in üblicher Ausbildung, der mit zwei seitlichen, vom Fördergurt ungefähr senkrecht wegstehenden Wellenkanten 2 ebenfalls üblichen Ausbildung besetzt ist, wobei jedoch in Figur 1 nur die eine Wellenkante schematisch, das heisst ohne Darstellung ihrer Wellen gezeigt ist. In regelmässigen Längsabständen sind auf dem Fördergut 1 quer zur Fördergurtlängsrichtung ausgerichtete, abgewinkelte Mitnehmerleisten 5 angebracht, die den Raum zwischen den Wellenkanten in einzelne Förderräume 6 unterteilen.

Bei dem gezeigten Ausführungsbeispiel handelt es sich um einen L-Förderer, bei welchem der Fördergurt mit seinem Fördertrum 1a und auch mit seinem Rücktrum 1b im Bereich einer Fördergurtaufgabe in nicht näher gezeigter Weise entweder horizontal oder in Förderrichtung leicht ansteigend geführt ist. Hinter der Fördergutaufgabe erfolgt eine Ablenkung des Fördertrumes 1a

in die senkrechte Richtung, so dass der Fördergurt in senkrechter Richtung einer oberen Abwurftrommel 9 zuläuft. An dieser wird er um 180° umgelenkt und läuft als Rücktrum 1b ebenfalls in senkrechter Richtung von der Abwurftrommel 9 weg. Hierdurch wird das Schüttgut in Förderrichtung 8 bis zur Abwurftrommel 9 angeboten und an dieser an einer Abgabestelle 10 ausgeschüttet.

Der Abwurftrommel 9 ist eine Abdeckung in Form eines mitlaufenden Deckbandes 12 zugeordnet. Das Deckband 12 ist ebenfalls aus Gummi oder dergleichen in üblicher Ausbildung hergestellt und mit mit zwei seitlichen, vom Deckband 12 ungefähr senkrecht nach aussen wegstehenden Wellenkanten 13 ebenfalls üblicher Ausbildung besetzt, wobei in Figur 1 lediglich die eine Wellenkante schematisch, ohne Darstellung ihrer Wellen gezeigt ist. Das endlose Deckband 12 ist durch mindestens drei, im vorliegenden Ausführungsbeispiel vier Deckband-Umlenktrommeln 15, 16, 17 und 18 geführt.

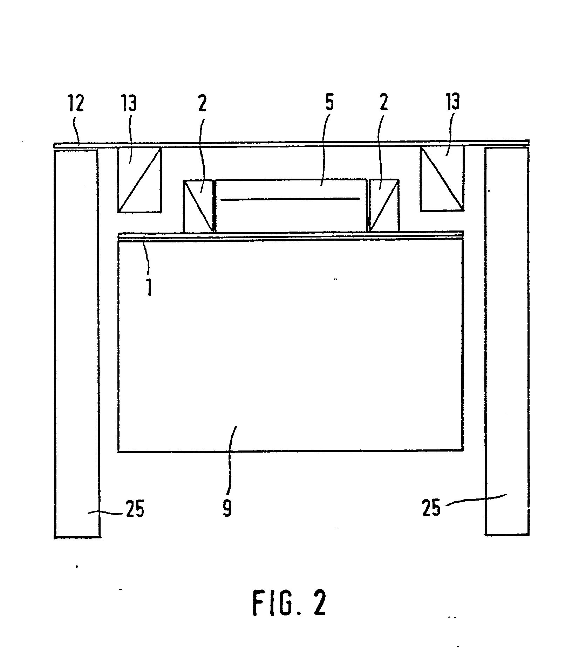

Zwischen den Umlenktrommeln 18 und 15 im Umlenkbereich der Abwurftrommel 9 läuft das Deckband 12 auf zwei Scheibenrädern 25, vergleiche Figur 2, die beidseitig der Abwurftrommel 9 angeordnet sind und auf der gleichen Drehachse wie diese, jedoch getrennt davon gelagert sind. Die Scheibenräder greifen an schmalen Randbereichen des Deckbandes ausserhalb dessen Wellenkanten 13 an. Die Scheibenräder 25 haben einen grösseren Durchmesser als die Abwurftrommel 9 derart, dass der Abstand des Fördergurtes 1 zum Deckband 12 grösser ist als die Höhe der Wellenkanten 13 des Deckbandes 12 und auch grösser als die Höhe der Wellenkanten 2 und der Mitnehmerleisten 5 des Fördergurtes 1. Ausserdem ist die Dimensionierung des Deckbandes so getroffen, dass der quer zur Deckbandrichtung gemessene Innenabstand der Wellenkanten 13 des Deckbandes 12 grösser ist als der Aussenabstand der Wellenkanten 2 des Fördergurtes 1. Durch entsprechend tiefe Anordnung der Deckband-Umlenktrommeln 18 und 15 ergibt sich eine Führung des Deckbandes derart, dass es mit dem Fördertrum 1a des Fördergurtes unter einem spitzen Winkel zusammenläuft und ebenfalls unter einem spitzen Winkel zum Rücktrum 1b beziehungsweise zur Senkrechten aus dem Umlenkbereich der Abwurftrommel 9 wegläuft, wobei es im Umlenkbereich quasi über den Fördergurt gestülpt ist.

Die Abwurfparabel des geförderten Schüttgutes an der Abwurfstelle 10 entsteht zwischen dem senkrechten Rücktrum 1b und dem mit einem geraden Abschnitt von den Scheibenrädern 25 zur Umlenktrommel 15 sich erstreckenden Deckband. Die Richtung dieser Abwurfparabel kann in einfacher Weise durch eine Lage-Verstellung der Deckband-Umlenktrommel 15 verändert werden. Hierzu ist diese am freien Ende eines in der Länge veränderbaren Schwenk-Hebels 26 gelagert, der zur Abwurfparabel-Steuerung um seinen Drehpunkt 27 geschwenkt wird. Damit das Deckband 12 in jeder Schwenk-Stellung gespannt bleibt, ist der längsveränderliche Hebel 26 ständig druckbeaufschlagt, zum Beispiel durch eine intern angeordnete Feder oder durch ein Hydraulikmedium.

Das Deckband hat einen nicht näher gezeigten eigenen Antrieb, zum Beispiel mittels eines Elektromotors. Wenn über diesen die Geschwindigkeit des Deckbandes verstellbar ist, kann auch durch Wahl einer unterschiedlichen Geschwindigkeit des Deckbandes in bezug auf die des Fördergurtes eine Beeinflussung der Abwurfparabel erreicht werden. Alternativ ist es möglich, auf einen eigenen Antrieb für das Deckband zu verzichten und es vom Fördergut mitnehmen zu lassen, und zwar entweder durch unmittelbaren Reibschluss mit dem Fördergurt im Umlenkbereich der Abwurftrommel oder durch eine Kopplung der Scheibenräder mit der Abwurftrommel.

Anstelle der Scheibenräder kann in nicht näher gezeigter Weise jeweils eine entsprechend der Bahn des Deckbandes im Umlenkbereich der Abwurftrommel angeordneter Reihe von Stummelrollen vorgesehen sein, die wie die Scheibenräder ausserhalb der Wellenkanten 13 an Randbereichen des Deckbandes 12 angreifen.

## Patentansprüche

1. Gurtförderer für die Steil- und Senkrechtförderung von Schüttgut mit einem Fördergurt (1) mit auf der Tragseite aufgesetzten Fördertaschen (2, 5), bei welchem der Fördergurt (1) vor und hinter einer oben liegenden Abwurftrommel (9) für das Schüttgut steil oder senkrecht geführt und der Abwurftrommel (9) eine Abdeckung zugeordnet ist, die durch ein mitlaufendes Deckband (12) gebildet ist, das im Umlenkbereich der Abwurftrommel (9) die Fördertaschen (2, 5) des Fördergurtes (1) überdeckt, dadurch gekennzeichnet, dass die Fördertaschen durch auf den Fördergurt (1) seitlich aufgesetzte Wellenkanten (2) und dazu quer ausgerichtete, in Fördergurtlängsrichtung in Abständen angeordnete Mitnehmerleisten (5) aus elastomerem Werkstoff gebildet sind, und dass das Deckband (12) ebenfalls seitlich aufgesetzte Wellenkanten (13) aufweist.

2. Gurtförderer nach Anspruch 1, dadurch gekennzeichnet, dass der quer zur Deckbandlängsvorrichtung gemessene Innenabstand der Wellenkanten (13) des Deckbandes (12) grösser ist, als der entsprechende Aussenabstand der Wellenkanten (2) des Fördergurtes (1).

3. Gurtförderer nach Anspruch 1 oder 2, dadurch gekennzeichnet, dass das Deckband (12) im Umlenkbereich der Abwurftrommel (9) parallel zum Fördergurt (1) geführt ist.

4. Gurtförderer nach Anspruch 1, 2 oder 3, dadurch gekennzeichnet, dass im Umlenkbereich der Abwurftrommel (9) der Abstand zwischen Fördergurt (1) und Deckband (12) grösser ist als die Höhe der Wellenkanten (2) und Mitnehmerleisten (5) des Fördergurtes (1) und/oder als die Höhe der Wellenkanten (13) des Deckbandes (12).

5. Gurtförderer nach Anspruch 3, dadurch gekennzeichnet, dass die Wellenkanten (2) und Mitnehmerleisten (5) des Fördergurtes (1) und die Wellenkanten (13) des Deckbandes (12) gleiche Höhe haben und dieser im Umlenkbereich der Abwurftrommel (9) der Abstand zwischen Fördergurt (1) und Deckband (12) entspricht.

6. Gurtförderer nach einem der Ansprüche 1 bis 5, dadurch gekennzeichnet, dass das Deckband (12) im Umlenkbereich der Abwurftrommel (9) über zwei Scheibenräder (25) läuft, und dass die Abwurftrommel (9) und die beidseitig daran angeordneten Scheibenräder (25) auf der gleichen Drehachse getrennt gelagert sind.

7. Gurtförderer nach einem der Ansprüche 1 bis 6, dadurch gekennzeichnet, dass das Deckband (12) hinter der Abwurftrommel (9) über einen Abschnitt seiner Umlaufstrecke unter spitzem Winkel zur Senkrechten geführt ist.

8. Gurtförderer nach Anspruch 7, dadurch gekennzeichnet, dass die Grösse des spitzen Winkels einstellbar ist.

9. Gurtförderer nach Anspruch 8, dadurch gekennzeichnet, dass das Deckband (12) von der Abwurftrommel (9) zu einer Deckband-Umlenktrommel (15) läuft, die in ihrer Lage verstellbar ist.

10. Gurtförderer nach Anspruch 10, dadurch gekennzeichnet, dass die Deckband-Umlenktrommel (15) an einem in der Länge veränderbaren, jeweils die maximale Länge einnehmenden, schwenkbaren Haltearm (26) angebracht ist.

## Revendications

1. Transporteur à courroie vertical ou à pente raide pour le transport de matériaux en vrac qui comporte une courroie transporteuse (1) munie de poches de transport (2,5) situées du côté porteur et dans lequel la courroie transporteuse (1) suit, avant et après un tambour (9) supérieur assurant le déchargement des matériaux en vrac, un trajet à pente raide ou vertical, le tambour de déchargement (9) étant muni d'un dispositif de couverture constitué par une bande couvrante (12) qui suit son mouvement et dans la zone de renvoi par le tambour de déchargement (9), recouvre les poches de transport (2, 5) de la courroie transporteuse (1), caractérisé en ce que les poches de transport sont formées par des bords ondulés (2) montés latéralement sur la courroie transporteuse (1) et par des lattes d'entraînement en matériau élastomère orientées transversalement par rapport à ces bords et situées à une certaine distance les unes des autres dans le sens de la longueur de la courroie transporteuse et en ce que la bande couvrante (12) comporte également des bords ondulés (13) montés latéralement.

2. Transporteur à courroie selon la revendication 1, caractérisé en ce que la distance intérieure entre les bords ondulés (13) de la bande couvrante (12), mesurée transversalement par rapport au sens de la longueur de la bande couvrante, est plus grande que la distance extérieure correspondante entre les bords ondulés (2) de la courroie transporteuse (1).

3. Transporteur à courroie selon l'une des revendications 1 ou 2, caractérisé en ce que la bande couvrante (12) est, dans la zone de renvoi du tambour de déchargement (9), guidée parallèlement à la courroie transporteuse (1).

4. Transporteur à courroie selon l'une des revendications 1, 2 ou 3, caractérisé en ce que, dans la zone de renvoi du tambour de déchargement (9), la distance entre la courroie transporteuse (1) et la bande couvrante (12) est plus grande que la hauteur des bords ondulés (2) et des lattes d'entraînement (5) de la courroie de transport (1) et/ou que la hauteur des bords ondulés (13) de la bande couvrante (12).

5. Transporteur à courroie selon la revendication 3, caractérisé en ce que les bords ondulés (2) et les lattes d'entraînement (5) de la courroie transporteuse (1) et les bords ondulés (13) de la bande couvrante (12) ont la même hauteur et qu'à celle-ci correspond, dans la zone de renvoi du tambour de déchargement (9), la distance entre la courroie transporteuse (1) et la bande couvrante (12).

6. Transporteur à courroie selon l'une des revendications 1 à 5, caractérisé en ce que, dans la zone de renvoi du tambour de déchargement (9), la bande couvrante (12) passe sur deux roues à disque pleines (25) et en ce que le tambour de déchargement (9) et les roues pleines (25) placées de ses deux côtés sont montées séparément sur paliers sur le même axe de rotation.

7. Transporteur à courroie selon l'une des revendications 1 à 6, caractérisé en ce que la bande couvrante (12) est derrière le tambour de déchargement (9), guidée sur un secteur de son trajet suivant un angle aigu par rapport à la verticale.

8. Transporteur à courroie selon la revendication 7, caractérisé en ce que la grandeur de cet angle est réglable.

9. Transporteur à courroie selon la revendication 8, caractérisé en ce que la bande couvrante (12) va, à partir du tambour de déchargement (9) jusqu'à un tambour de renvoi (15) de la bande couvrante dont la position est réglable.

10. Transporteur à courroie selon la revendication 9, caractérisé en ce que le tambour de renvoi (15) de la bande couvrante est monté sur un bras de maintien (26) dont la longueur est variable et qui prend toujours la longueur maximale.

**Claims**

1. A belt conveyor for steep or vertical conveyance of bulk material, comprising a conveyor belt (1) having fitted to the carrying side thereof conveying pocket means (2, 5), in which the conveyor belt (1) is guided to run in a steep or vertical path upstream and downstream of an upper discharge drum (9) for the bulk material, and a covering means is associated with the discharge drum (9) and is defined by a follower cover belt (12) which overlies the conveying pocket means (2, 5) of the conveyor belt (1) within the deflection zone of said discharge drum (9), characterized in that the conveying pocket means are formed by corrugated side walls (2) fitted onto the conveyor belt (1) at sides thereof, and by cleats (5) made from elastomeric material which are disposed in transverse relation to said side walls and spaced along the length of the conveyor belt, and in that also said cover belt (12) includes corrugated side walls (13) fitted onto sides thereof.

2. The belt conveyor according to claim 1, characterized in that the distance as measured transversely to the lengthwise extension of the cover belt between the inner edges of said corrugated side walls (13) of cover belt (12) is greater than the distance between corresponding outer edges of said corrugated side walls (2) of conveyor belt (1).

3. The belt conveyor according to any of claims 1 and 2, characterized in that the cover belt (12) is guided in parallelism with the conveyor belt (1) within the deflection zone of said discharge drum (9).

4. The belt conveyor according to any of claims 1, 2 and 3, characterized in that within the deflection zone of said discharge drum (9), the distance between conveyor belt (1) and cover belt (12) is greater than the height of the corrugated side walls (2) and cleats (5) of conveyor belt (1) and/or greater than the height of the corrugated side walls (13) of cover belt (12).

5. The belt conveyor according to claim 3, characterized in that the corrugated side walls (2) and cleats (5) of conveyor belt (1) and the corrugated side walls (13) of cover belt (12) have identical heights to which corresponds the distance between conveyor belt (1) and cover belt (12) within said deflection zone of discharge drum (9).

6. The belt conveyor according to any of claims 1 to 5, characterized in that the cover belt (12), as it runs within said deflection zone of discharge drum (9), runs on two disk wheels (25), and in that the discharge drum (9) and said disk wheels (25), mounted on opposite sides thereof, are supported separately on the same rotational axis.

7. The belt conveyor according to any of claims 1 to 6, characterized in that the cover belt (12) is guided to run over a portion of its path, downstream of said discharge drum (9), under an acute angle with respect to the vertical.

8. The belt conveyor according to claim 7, characterized in that the amount of said acute angle is adjustable.

9. The belt conveyor according to claim 8, characterized in that said cover belt (12) travels from said discharge drum (9) to a cover belt deflector (15) which is adjustable in position.

10. The belt conveyor according to claim 10, characterized in that said cover belt deflector drum (15) is mounted to a pivotable supporting arm (26) of variable length which is biased to maintain the maximum length possible.

FIG. 1

FIG. 2